# EUROPEAN PATENT APPLICATION

(11) **EP 1 321 334 A2**
(43) Date of publication of application: **25.06.2003**
(21) Application number: 02257850.4
(22) Date of filing: 14.11.2002
(51) Int. Cl.: B60R 1/06, B60R 1/12, B60R 11/04

(54) **Exterior rearview mirror with built-in camera**

(30) Priority: 03.12.2001 JP 2001369148
(71) Applicant: Murakami Corporation, Shizuoka-shi, Shizuoka (JP)
(72) Inventor: Hitomi, Yoshinori, Toyota-shi, Aichi-ken 471-8571 (JP); Fujikawa, Yoshihiro, Toyota-shi, Aichi-ken 471-8571 (JP); Kobayashi, Akiyoshi, Fujieda-shi, Shizuoka (JP)
(74) Representative: Sanderson, Michael John

(57) **Abstract**

A camera built-in exterior rearview mirror (1) is presented, which has a mirror housing (2) mounted on a vehicle through a mirror base (6) for free pivotal movement from a neutral position to a rear stored position and a front position, a camera module (10) disposed in the mirror housing (2), a camera (12) installed in the camera module (10) and a camera angle adjusting mechanism (20) for adjusting an angle of the camera (12), the camera (12) being controlled for restraining shifting of an image acquisition area so that it can be an approximately fixed area while the mirror housing (2) makes a pivotal movement.

## Description

The present invention relates to a camera built-in exterior rearview mirror used for a side or door mirror of a vehicle, in which its mirror housing is pivotally driven for a position adjustment.

An exterior mirror mounted on the front side of a vehicle such as an automobile, especially the one on a passenger-seat side, a door mirror for example, is likely to have a dead angle zone in an area right under the door mirror to the vicinity of a front wheel, thereby causing a poor field of view. A driver is likely to encounter an accident when an obstacle is caught under the wheel at starting of the vehicle if there exists one near the front wheel of passenger-seat side.

Japan Laid-Open Patent 2000-16181 (hereinafter referred to as the prior art 1) discloses a door mirror having a small camera which is installed inside a mirror housing and oriented downward. Also as Japan Laid-Open Utility Model H03-42779 (hereinafter referred to as the prior art 2) discloses, an arrangement in which a small camera installed in a mirror housing is interlocked with shifting operation of a back gear has been known. Further, Japan Laid-Open Patent 2000-272418 (hereinafter referred to as the prior art 3) discloses an arrangement in which a small camera is installed rotationally controllable by a driving unit situated in a housing prepared outside a mirror housing.

The door mirrors described in the prior arts improve a field of view with a small camera by capturing images of the front, side and rear as well as the lower portion of a vehicle and for example displaying them on a monitor disposed on an instrument panel in a vehicle cabin.

However, in the conventional camera built-in exterior rearview mirrors described above, one shown in the prior art 1 for example, the field of view especially with regard to the outer front alongside a vehicle can not be improved even if a wide angle or fish-eye lens is used since a lens of a small camera is oriented to the ground right under a mirror housing. Since the small camera is secured inside the mirror housing, the area of image captured by the camera varies inevitably when the mirror housing is retracted to a stored position on the side-door wall of a vehicle, pivoting in a rear direction from a normal use position (hereinafter referred to as neutral position). This means that a fixed image acquisition area, the same as that of the neutral position, can not be achieved when the mirror housing is pivoted front or rear of a vehicle.

On the other hand, the camera built-in rearview mirrors described in the prior arts 2 and 3, in which a small camera capable of rotating with a rotational mechanism, can allow a lens of the small camera to keep approximately the same image acquisition area by rotationally controlling the camera while the mirror housing is retracted.

However, when the camera is disposed so that an optical axis is oriented to a somewhat diagonal outer front relative to a vehicle for capturing wide images, the rearview mirrors shown in the prior arts 2 and 3 require troublesome handling associated with controlling of a movable portion for adjusting an image acquisition angle of the lens in order to keep an approximately the same image acquisition area, each time the mirror housing is retracted.

It would be desirable to be able to provide a camera built-in exterior rearview mirror, which is able to retain the same image acquisition area as that of a neutral position and to maintain a good field of view for the vicinity of a front wheel of vehicle.

The present invention according to a first aspect presents a camera built-in exterior rearview mirror having a mirror housing which is mounted on a vehicle through a mirror base for free pivotal movement from a neutral position to a rear stored position and a front position, a camera module disposed in the mirror housing, a camera installed in the camera module and a camera angle adjusting means for adjusting an angle of the camera. The camera can restrain shifting of an image acquisition area so that it can be an approximately fixed area while the mirror housing makes a pivotal movement.

The present invention based on the arrangement described above, which restrains the camera from shifting an image acquisition area depending on a pivotal movement of the mirror housing, does not have an affect on the image acquisition area and can keep an approximately fixed field of view which is the same as that of a neutral position, namely a normal use position.

The present invention also provides a camera built-in exterior rearview mirror, in which the camera angle adjusting means has a camera control means for controlling rotationally the camera that is installed rotatably in the camera module.

Since the present invention based on the aforementioned arrangement can control rotationally the camera in parallel with retracting of the mirror housing, thereby maintaining an approximately fixed image acquisition area so that its shifting depending on a pivotal movement of the mirror housing is restrained.

The present invention still provides a camera built-in exterior rearview mirror, in which a lens of the camera installed in the camera module is oriented downward.

The present invention can thus capture an image of the dead angle zone of a vehicle reliably. Also it allows the lens to be less likely to become soiled and improves an appearance of the exterior rearview mirror.

The present invention yet provides a camera built-in exterior rearview mirror, in which the camera installed in the camera module captures images through a transparent element covering an observation opening made on the mirror housing.

In this way, the present invention protects securely the lens of camera against being soiled, thereby maintaining high performance in terms of the image acquisition and the field of view.

The present invention further provides a camera built-in exterior rearview mirror, in which the transparent element is integrally mounted to the camera module.

The present invention thus enables covering of the observation opening with a transparent element in parallel while the camera module is installed in the mirror housing.

The present invention still further provides a camera built-in exterior rearview mirror, in which a rotational axis of the camera installed rotatably in the camera module and a pivotal axis of the mirror housing are approximately parallel.

The present invention based on the arrangement described above allows an easier adjustment of image acquisition area between the neutral position (normal use position) and the stored position.

The present invention yet further provides a camera built-in exterior rearview mirror, in which a rotational angle of the camera is approximately the same as a pivotal angle of the mirror housing.

The present invention in this way provides not only a rotational axis of the camera which is parallel to a pivotal axis of the mirror housing but also an easier adjustment of image acquisition area between the neutral (normal use) and stored positions.

As another feature, the present invention provides a camera built-in exterior rearview mirror, in which a pivotal movement of the mirror housing is controlled by a motor and the camera is also rotated by driving force of the motor.

The present invention thus provides a driving motor, which is able not only to pivotally drive the mirror housing but also to serve as a rotational driving mechanism for the camera, allowing a reduction in the number of parts and easier wiring for a power supply unit.

As still another feature, the present invention provides a camera built-in exterior rearview mirror, in which the camera module is installed in the mirror housing attachably thereto and detachably therefrom.

The present invention thus enables easier mounting of the camera module into the mirror housing and easier wiring for the camera as well.

The present invention according to a second aspect provides a camera built-in exterior rearview mirror having a mirror housing which is mounted on a vehicle through a mirror base for free pivotal movement from a neutral position to a rear stored position and a front position, a camera module disposed in the mirror housing, a camera installed in a camera housing of the camera module and a lens of the camera which is oriented downward so that the camera can be positioned to face somewhat diagonally outer front alongside the vehicle to capture a wide image. The camera is disposed rotatably about a rotational axis in the camera housing, which is approximately in parallel with a pivotal axis of the mirror housing. The rearview mirror includes a driving mechanism which rotates the camera to follow a pivotal movement of the mirror housing. The driving mechanism maintains an optical axis of the camera approximately in parallel relative to a pivotal displacement from a neutral position of the mirror housing so that shifting of an image acquisition area of the camera can be restrained.

The present invention based on the arrangement described above allows the rotational axis of camera, which moves depending on pivotal movement of the mirror housing, to be in parallel with the pivotal axis thereof. In addition, the optical axis of camera is rotationally controlled while it keeps parallelism so that shifting of image acquisition area can be restrained. In this way the camera built-in exterior rearview mirror according to the present invention can provide the approximately same image acquisition area as that of the neutral position even if the mirror housing makes a pivotal movement for retraction.

The present invention also provides a camera built-in exterior rearview mirror, in which the drive mechanism includes an interlocking element which interlocks with a pivotal displacement of the mirror housing relative to the mirror base and rotates the camera not only in an opposite direction to a pivotal direction of the mirror housing but also by an rotational angle which is approximately the same as a pivotal angle of the mirror housing.

In the mirror built-in exterior rearview mirror according to the present invention, the camera is rotated in an opposite direction of pivotal movement of the mirror housing and by the approximately same amount of rotational angle as that of the pivotal angle of mirror housing. In this way almost the same image acquisition area can be attained for both the neutral and stored positions of the mirror housing.

The present invention according to a third aspect provides a camera built-in exterior rearview mirror having a mirror base secured to a vehicle, a support shaft projecting from the mirror base, a support frame supported rotatably on the mirror base through the support shaft, a mirror housing which is pivotable from a neutral position to a front position and a rear stored position relative to the mirror base, a camera housing installed in the mirror housing and a camera installed in the camera housing, which is secured to the mirror housing so that a lens of the camera can be oriented downward to face an observation opening provided on a bottom surface of the mirror housing. The camera is supported rotatably about a rotational axis, which is approximately in parallel with a pivotal axis, through a rotational shaft in the camera housing, and the lens is oriented so that an optical axis of the lens can be pointed to a somewhat diagonal outer front alongside the vehicle and the camera can capture a wide image. The rearview mirror includes a driving mechanism which can rotate the camera by a rotational angle which is approximately the same as a pivotal angle of the mirror housing in an opposite direction to a pivotal direction of the mirror housing.

Though the lens of camera is arranged so that the optical axis is pointed to the somewhat diagonal outer front alongside the vehicle to capture a wide image, the optical axis can be controlled to keep parallelism continuously while the mirror housing makes a pivotal movement from the neutral position since the camera is rotated reversely by approximately the same amount of rotational angle as that of the pivotal angle of mirror housing. The image acquisition area can be kept approximately fixed even if the mirror housing makes a pivotal movement for retraction.

The present invention also provides a camera built-in exterior rearview mirror having a first connection provided around the support shaft of mirror base, a second connection provided for the rotational shaft of camera and an interlocking element having a first holding element and a second holding element at both ends thereof, each of the first and second elements being in contact with each of the first and second connections, and the interlocking element supported shiftably and pivotably by a support frame to which the mirror housing is secured. The interlocking element can make a shifting and pivotal movement and rotate the rotational shaft of the camera interlocking with a pivotal movement of the mirror housing about the support shaft which supports the support frame.

The present invention based on the arrangement described above provides a driving mechanism which can rotate the camera interlocked with a pivotal movement of the mirror housing, thereby allowing sharing of the driving mechanism which is prepared for pivotal drive control of the mirror housing and obviating another driving unit for rotational control of the camera.

The present invention still provides a camera built-in exterior rearview mirror, in which at least the first connection includes a storing rib and a returning rib having a gap therebetween, a rod of the first holding element is disposed between the ribs, when the mirror housing is in the neutral position, the rod is placed apart from the storing rib, or when the mirror housing is in the stored position, the rod is placed apart from the returning rib.

The present invention thus provides the storing and returning ribs having a gap therebetween on a connection for rotating the camera. A rod of the interlocking element lies between these ribs. Since when the mirror housing is in the neutral position, the rod is placed apart from storing rib and when it is in the stored position, the rod is placed apart from the returning rib, the rod of interlocking element comes into contact with the storing or returning rib after a commencement of pivotal movement at the neutral or stored position, respectively. In this way, after the rotation of the motor prepared for rotating the mirror housing has been stabilized, a load for rotating the camera is imposed on the motor, thereby allowing a stable pivotal movement for the mirror housing. Especially, it remarkably benefits an electrically retractable rearview mirror which has a circuit for detecting an increase in the current of motor in a mechanism for terminating pivotal movement of mirror housing.

The present invention yet provides a camera built-in exterior rearview mirror, in which the rod is released from the returning rib while the mirror housing makes a pivotal movement from the neutral position to the forward position.

Accordingly, the movable area of rod can be set to be smaller since the rod is released from the returning rib while the mirror housing is on the way making a pivotal movement from the neutral to front position. In this way, downsizing of the driving mechanism for camera can be achieved and an unnecessary rotational movement of the camera can be prevented.

The present invention further provides a camera built-in exterior rearview mirror, in which the mirror further includes an adjusting mechanism for restricting a rotational area for the camera contained in the camera housing. The adjusting mechanism positions the camera discretely for the neutral, stored and forward positions.

The invention can thus improve the accuracy of positioning for the neutral, stored and front positions of the camera.

By way of examples only, the aspects of the invention will be described in greater detail with reference to the accompanying drawings of which:
FIG.1 is a front view showing a door mirror to which the camera built-in exterior rearview mirror according to a first embodiment of the present invention is applied.
FIG.2 is an enlarged perspective view showing the internal structure of a door mirror without a mirror.
FIG.3 is an enlarged sectional view showing mounting of a camera inside mirror housing.
FIG.4 is a plan view illustrating a camera position and shifting of an optical axis at neutral and stored positions during a pivotal movement of mirror housing.
FIG.5 is sectional view taken along line V - V illustrating a rotational movement of camera at a neutral position during a pivotal movement of mirror housing.
FIG.6 is a sectional view illustrating a rotational movement of camera at a stored position during a pivotal movement of mirror housing.
FIG.7 is a sectional view illustrating a rotational movement of camera at a forward position during a pivotal movement of mirror housing.
FIG.8 is a figure showing an image acquisition area of a camera at neutral and stored positions compared with conventional one at a stored position during a pivotal movement of mirror housing.
FIGS.9A, 9B and 9C are explanatory figures illustrating images displayed on a monitor during a pivotal movement of mirror housing: FIG.9A illustrates an image captured by a camera of the present invention displayed on a monitor for a neutral position, FIG.9B illustrates an image captured by a conventional camera displayed on a monitor for a stored position, FIG.9C illustrates an image captured by a camera of the present invention displayed on a monitor for a stored position
FIG.10 is a figure illustrating a driving mechanism of camera according to a second embodiment of the present invention when it is used for a door mirror.
FIGS.11A, 11B and 11C are figures illustrating driving mechanisms of camera according to other embodiments of the present invention when they are used for a door mirror: FIG.11A is for a third embodiment, FIG.11B for a fourth embodiment and FIG.11C for a fifth embodiment, respectively.
FIG.12 is an enlarged sectional view showing the major internal structure of a mirror housing which has an adjusting mechanism for positioning the rotation of a camera discretely.
FIG.13 is an exploded perspective view showing the structure of an adjusting mechanism.
FIG.14 is a figure illustrating the layout of grooves formed on a plate clutch for neutral, stored and forward positions.

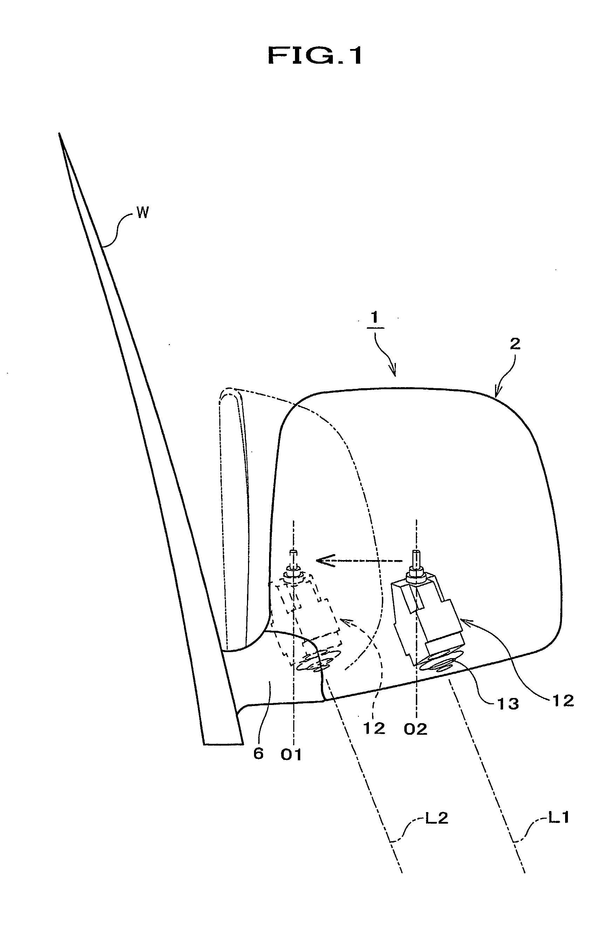

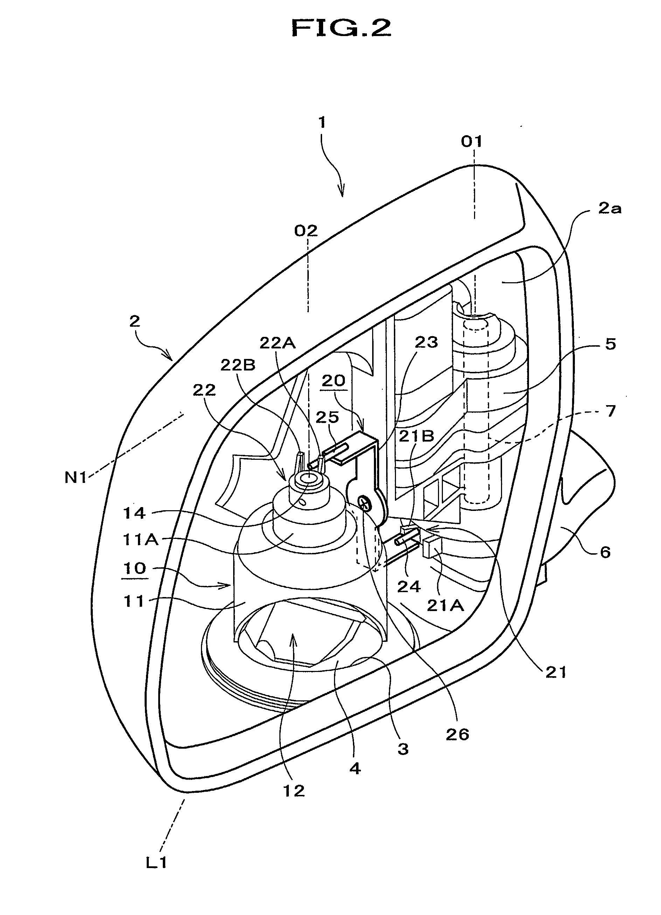

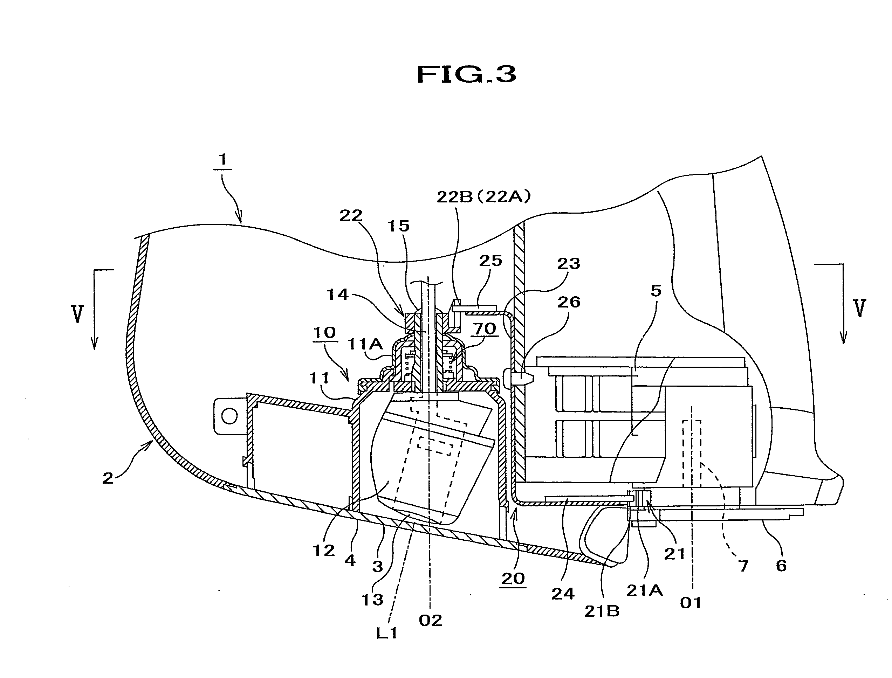

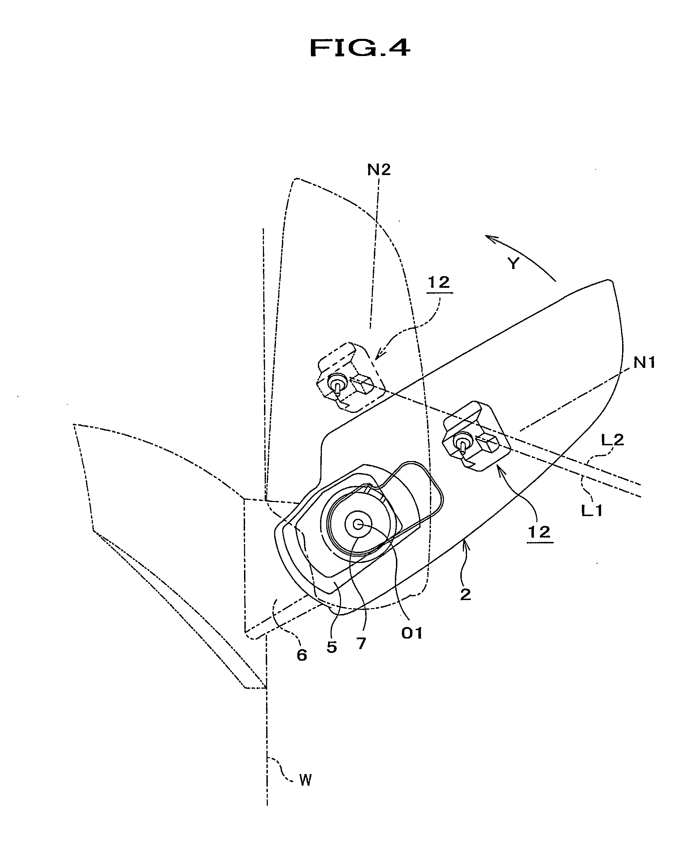

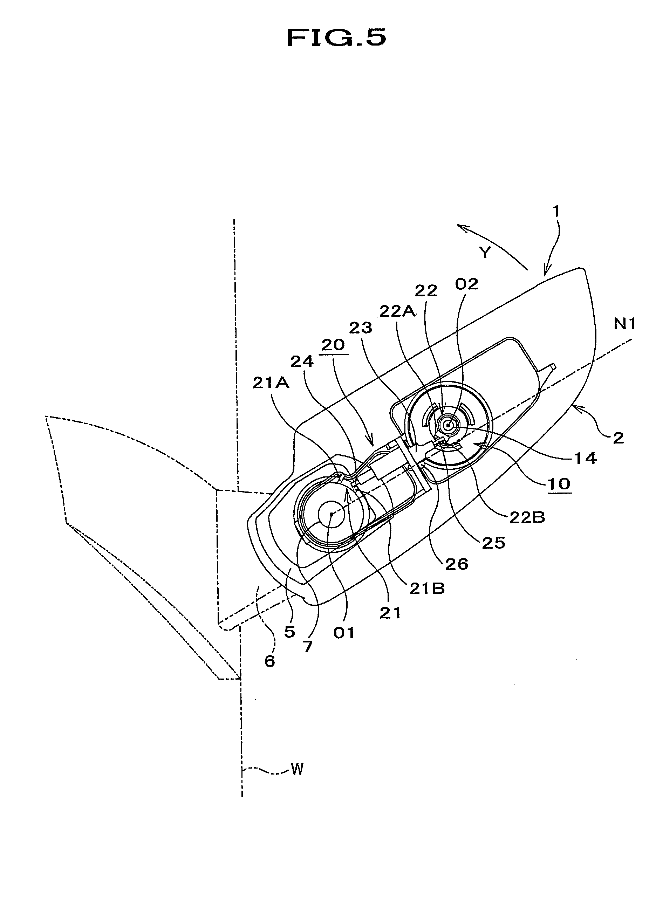

A first embodiment of the present invention will now be described in detail referring to the accompanying drawings. FIG.1 is a front view showing the camera built-in exterior rearview mirror according to the first embodiment of the present invention, which is, for example, mounted to a vehicle as a door mirror and seen from the front of vehicle. FIG.2 is an enlarged perspective view showing the internal structure when a mirror is removed. FIG.3 is an enlarged sectional view showing the installation of camera in a mirror housing. FIG.4 is a plan view illustrating an outline of a camera position and movement of an optical axis of the mirror housing at neutral and stored positions in a pivotal movement of the mirror housing. FIG.5 is an enlarged sectional view illustrating an outline of a driving unit of camera at the neutral position in a pivotal movement of the mirror housing.

As shown in FIG.1, a door mirror 1 of the present invention is mounted to a front door of passenger's seat side. This door mirror 1 is, as shown in FIG.2, accommodates a mirror (not shown), which is mounted in a plane of opening 2a located at the front of a mirror housing 2 made of synthetic resin. On the bottom surface of mirror housing 2 is made an observation opening as shown in FIG.3. A camera module 10 disposed in the mirror housing 2 faces this observation opening 3, which is covered by a transparent cover 4.

One end of mirror housing 2 is secured to a support frame 5, which is supported rotatably in a horizontal direction about a support shaft 7 projecting from a mirror base 6 to be secured to a door of vehicle W. The mirror housing 2 is thus mounted pivotably on the mirror base 6, from a neutral position N1 to a rearward stored position N2 or to a forward position N3, as shown in FIGS.4 - 7. The support frame 5 may be integrally molded with the mirror housing 2.

Inside the mirror housing 2 is secured the camera module 10 as shown in FIGS. 2 and 3. The camera module 10 comprises a camera housing 11 and a camera 12 installed in the camera housing 11. The camera 12 is disposed so that a lens 13 is oriented downward to face the observation opening 3 of mirror housing 2. Further, the lens 13 of camera 12 is disposed so that an optical axis L1 is pointed to a somewhat diagonal outer front alongside the vehicle W to capture wide images.

When the camera module 10 is installed into the mirror housing 2, it is mounted to the support frame 5 attachably thereto and detachably therefrom by fixing with screws, for example, inserted through the observation opening 3 made on the bottom surface of mirror housing 2. In this connection, the camera module 10, to which the transparent cover 4 is mounted in advance, may be installed in the mirror housing 2 so that the observation opening 3 can be covered by the transparent cover 4 simultaneously.

The camera 12 is supported rotatably about a rotational axis O2 of a rotational shaft 14 in the camera housing 11, which is parallel to a rotational axis O1 of mirror housing 2. As shown in FIG.3, an end of the rotational shaft 14 penetrates through a watertight seal 15 to the outside of camera housing 11. The camera 12 rotates interlocking with a pivotal movement of mirror housing 2 driven by a motor (not shown), in a Y direction shown with a solid arrow in FIG.4, for example. The associated rotational angle of camera 12 is approximately the same as the pivotal angle of mirror housing 2 and the direction is opposite to that of mirror housing 2. In this way as shown in FIG.4, optical axes L1 and L2 defined at a neutral position N1 and a stored position N2 respectively can keep approximate parallelism while the mirror housing 2 makes a pivotal movement from N1 to N2, so that shifting of image acquisition area can be restrained except for that caused by the rotational error of camera 12. As a result, the camera 12 can keep an approximately fixed image acquisition area not depending on a pivotal movement of mirror housing 2.

As shown in FIGS. 2 and 3, a driving mechanism 20 comprises a first connecting element 21 provided around the support shaft 7 of mirror base 6, a second connecting element 22 provided on a top of the rotational shaft 14 of camera 12 projecting from a frame 11A formed on a top of the camera housing 11, an interlocking element 23 for interlocking the first and second connecting elements 21 and 22 and rods 24 and 25 serving as a first and second holding elements provided on both ends of the interlocking element 23, respectively. The interlocking element 23, which is, for example, made of Z-shaped sheet metal, is supported movably through a vis 26 by the support frame 5 to which the mirror housing 2 is secured. The first and second rods 24 and 25, which are welded to both ends of the interlocking element 23 respectively, project therefrom.

As shown in FIG.5, the first connecting element 21 comprises a retracting rib 21A and a returning rib 21B which are disposed apart from each other. Also the second connecting element 22 has the same type of ribs, a retracting rib 22A and a returning rib 22B. The first rod 24 lies between the retracting rib 21A and returning rib 21B around the first connecting element 21. On the other hand, the second rod 25 lies between the retracting rib 22A and returning rib 22B around the second connecting element 22.

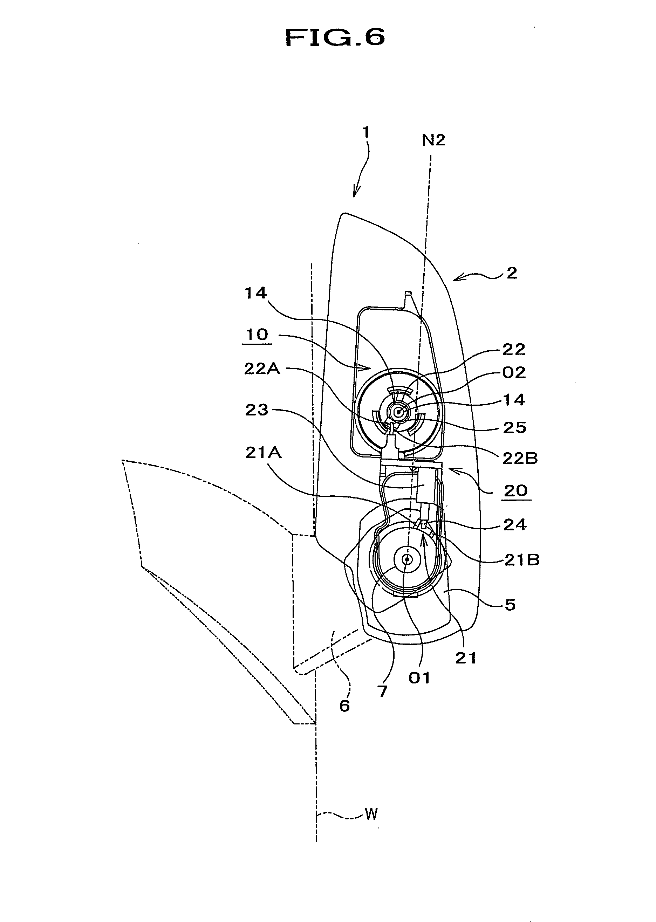

When the mirror housing 2 is in the neutral position N1 as shown in FIG.5, the first rod 24 stays away from the retracting rib 21A. On the other hand as shown in FIG.6, when the mirror housing 2 is in the stored position N2, the first rod 24 stays away from the returning rib 21B.

For this reason, when the mirror housing 2 is in a retracting operation as shown in FIG.5, the first rod 24 comes in contact with the retracting rib 21A with a delay after the mirror housing 2 starts making a pivotal movement from the neutral position N1 to the stored position N2. On the other hand as shown in FIG.6 when the mirror housing 2 is in a transition from the stored to normal use position, the first rod 24 comes in contact with the returning rib 21B with a delay after the mirror housing 2 starts making a pivotal movement from the stored position N2 to the neutral position N1. The camera 12 thus rotates with some error relative to the pivotal movement of mirror housing 2.

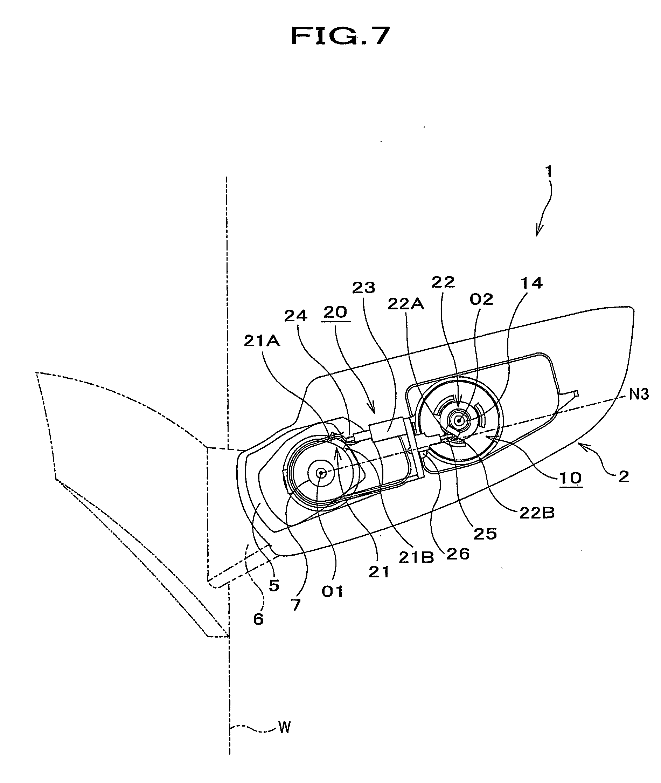

As shown in FIGS. 5 and 6, the height of retracting rib 21A is arranged to be larger than that of the returning rib 21B for the first connecting element 21 provided around the support shaft 7 of mirror base 6. In this way, the first trod 24 can be released from the returning rib 21B while the mirror housing 2 makes a pivotal movement from the neutral position N1 shown in FIG.5 to the front position N3 shown in FIG.7. It will thus protect the camera 12 against an excessive rotation by limiting the action of first rod 24.

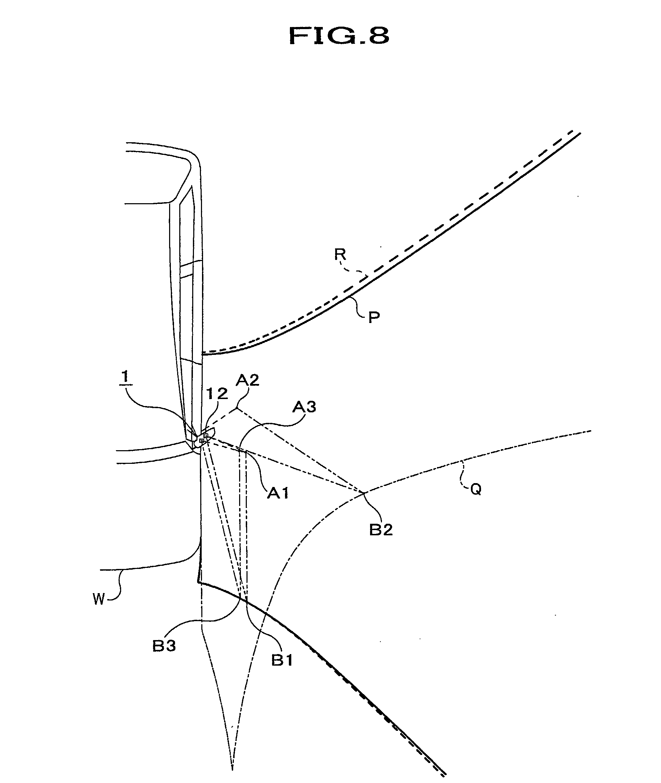

FIG.8 shows an image acquisition area captured by the camera 12 at the neutral position N1 and the stored position N2 of door mirror 1 according to the present invention resulting from a pivotal movement of the mirror housing 2, compared with that of a conventional door mirror at a stored position. As shown in FIG.8, when the mirror housing 2 is in the neutral position N1, an image can be captured covering the neutral position N1 to the stored position N2 evenly as shown by solid line P in FIG.8. And the vicinity of the front wheel of passenger's seat side of vehicle W is displayed on a monitor (not shown) disposed on the driver's seat side inside the cabin. However, when the mirror housing 2 makes a pivotal movement from the neutral position N1 to the stored position N2, an image acquisition area by the camera 12 conventionally shifts greatly as shown by two-dot chain line Q in FIG.8.

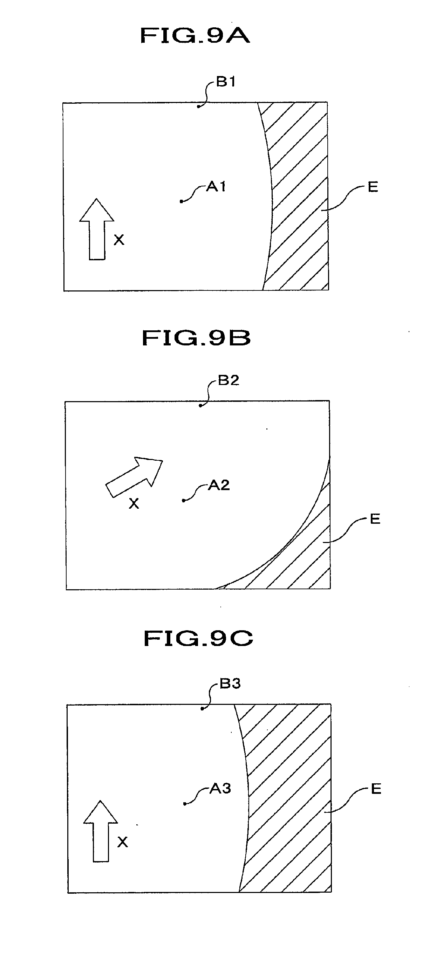

As shown in FIG.1, the optical axis L1 of lens 13 is oriented to a somewhat diagonal outer front alongside the vehicle W when the mirror housing 2 is in the neutral position N1. The location of optical axis L1 shifts from a point A1 to a point A2 according as the mirror housing 2 makes a pivotal movement from the neutral position N1 to the stored position N2. On a monitor (not shown) placed in the cabin, on the other hand, a point B1 located at the center of uppermost portion of the monitor displaying a captured image E for the vicinity of front wheel of vehicle W shown in FIG.9A, also shifts to a point B2 shown in FIG.9B when the mirror housing 2 makes a pivotal movement to the stored position N2. The image acquisition area captured by camera 12 thus varies, so that the camera 12 fails to capture the image for the vicinity of the front wheel of vehicle W at the stored position N2 since the camera is adjusted for the neutral position N1. In addition, since a traveling direction of the vehicle W also varies, it is likely to bring about confusion of a driver due to misapprehension.

In the present invention, on the other hand, the camera 12 is mounted rotatably to the inside of mirror housing 2, and the pivotal axis O1 of mirror housing 2 and the rotational axis O2 of camera 12 are configured to be parallel. In addition, the camera 12 is controlled to rotate reversely relative to the mirror housing 2 by the rotational angle which is approximately the same as the pivotal angle of mirror housing 2. The point A1, which is representative of the location of optical axis L1 of camera 12 when the mirror housing 2 is in the neutral position N1 as shown in FIG.8, shifts to a point A3 for the stored position N2. On the monitor screen the point B1 located at the center of uppermost portion of the monitor also shifts to a point B3 shown in FIG.9C for the stored position N2.

As shown by the two-dot chain line in FIG.1, even if the camera module 10 shifts from the neutral position N1 to the stored position N2, the optical axis L1 of neutral position N1 and the optical axis L2 of stored position N2 keep approximate parallelism therebetween so that shifting of the image acquisition area can be restrained for a pivotal displacement of mirror housing 2 from the neutral position N1, as shown in FIGS.1 and 4. The image area captured by the camera 12 at the stored position N2 thereby approximately the same as that at the neutral position N1 when the mirror housing 2 is stored. Therefore, the image acquisition area captured by the camera 12 at the stored position N2 is only slightly different from that of normal use at the neutral position N1 (shown by the solid line P) as shown by the dotted line R, thus permitting acquisition of images for approximately the same area, the vicinity of the front wheel of vehicle W.

The camera built-in exterior rearview mirror of the present invention includes the driving mechanism 20, which serves as a camera angle adjuster for the camera 12 so that it can adjust an angle of the camera 12 depending on the movement of mirror housing 2 that is mounted pivotably to the vehicle W from the neutral position N1 to the rear stored position N2, as shown in FIGS. 4 and 6. In this way, the driving mechanism 20 restrains shifting of the image acquisition area and provides an approximately fixed one for the camera 12 while the mirror housing 2 makes a pivotal movement. Therefore, retracting of the mirror housing 2 to the stored position does not affect the image acquisition area of camera.

Incidentally, when a pivotal movement of the mirror housing 2 is made from the neutral position N1 to the forward position N3, it is done by external force. As described before, since the interlocking element 23 is released from the driving mechanism 20 on the way of the mirror housing 2 making a pivotal movement forward, the camera 12 will not rotate. In the embodiment of the present invention with reference to the figures, description will be made paying attention to shifting of the image acquisition area of camera 12 while the mirror housing 2 makes a normal pivotal movement, for example a retracting operation by a pivotal movement from the neutral position N1 to the stored position N2. Accordingly, a pivotal movement of the mirror housing 2 from the neutral position N1 to the forward position N3 will not be included in the scope of the current discussion about shifting of the image acquisition area.

Since a camera control means is provided for the camera 12 for controlling a camera angle adjuster, rotational control of the camera 12 can be performed simultaneously with retracting operation of the mirror housing 2. This restrains shifting of the image acquisition area and provides an approximately fixed one for a pivotal movement of the mirror housing 2.

The camera 12 mounted in the camera housing 11 of camera module 10 is arranged so that the lens 13 is oriented downward and camera 12 capture images through the transparent cover 4 covering the observation opening 3 of mirror housing 2. The camera 12 can thus reliably capture images of the vicinity of the front wheel of vehicle W, particularly the dead angle zone of passenger's seat side. Further, this arrangement not only prevents the lens of camera 12 from being soiled but also improves appearance required for an exterior rearview mirror.

As shown in FIGS. 1 and 3, the rotational axis O2 of rotational shaft 14 of camera 12 is positioned in parallel with the pivotal axis O1 of mirror housing 2, which is supported pivotably by the support shaft 7 of mirror base 6 through the support frame 5. The camera 12 is thereby controlled so that the rotational angle is approximately the same as the pivotal angle of mirror housing 2 and the direction is opposite to the pivotal direction Y thereof. It helps adjust the image acquisition area for the camera 12 between the neutral (normal use) position N1 and the stored position N2 of mirror housing 2 easily.

Since pivotal movement of the mirror housing 2 is driven by a driving motor (not shown), this driving motor can simultaneously serve as a rotational driving mechanism for the camera 12. In this way another dedicated rotational driving mechanism is not required for rotational control of the camera 12, thereby allowing both a reduction in the cost by saving of parts and easier wiring of a power supply unit.

Further, since the camera module 10 comprises the camera housing 11 and the camera 12 rotatably mounted therein, mounting of the camera module 10 in the mirror housing 2 and wiring for the camera 12 can be more easily done.

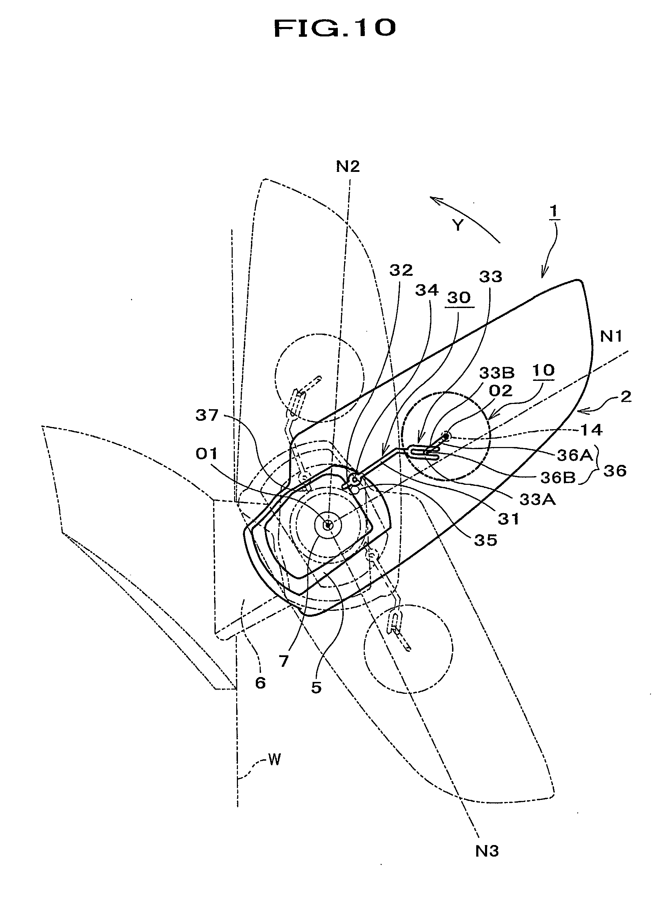

FIG.10 shows a camera driving mechanism of a second embodiment for the door mirror according to the present invention. A driving mechanism 30 of the second embodiment employs a rod arm 31 in place of the interlocking element of the first embodiment described before. One end of the rod arm 31 serves as a first holding element 32, and the other end, which branches off in two parts―a retracting arm 33A and a returning arm 33B, serving as a second holding element 33. The rod arm 31 is supported through an axis 34 shiftably and pivotably by a support frame 5 which supports a mirror housing 2.

A first connection 35 made of a projection is provided on a periphery of a support shaft 7 on a mirror base 6. And a second connection 36 comprises a lever 36A, one end of which is fixed rotatably to a top of a rotation shaft 14 of a camera 12, and a pin 36B provided on the other end of the lever 36A. The first holding element 32 of rod arm 31 is in contact with the first connection 35. On the other hand, the pin 36B of second connection 36 lies between the retracting and returning arms 33A and 33B, serving as the second holding element 33. In this way the camera 12 is controlled so that the rotational angle thereof can be approximately the same as the pivotal angle of mirror housing 2 and the rotational direction is opposite to that of mirror housing 2 while the mirror housing 2 makes a pivotal movement (e.g. Y direction of retracting shown by the solid line in FIG.10).

While the mirror housing 2 is retracted to the stored position by a pivotal movement thereof toward backward of a vehicle, the first holding element 32 comes into contact with a stopper 37, thereby rotating the camera 12.

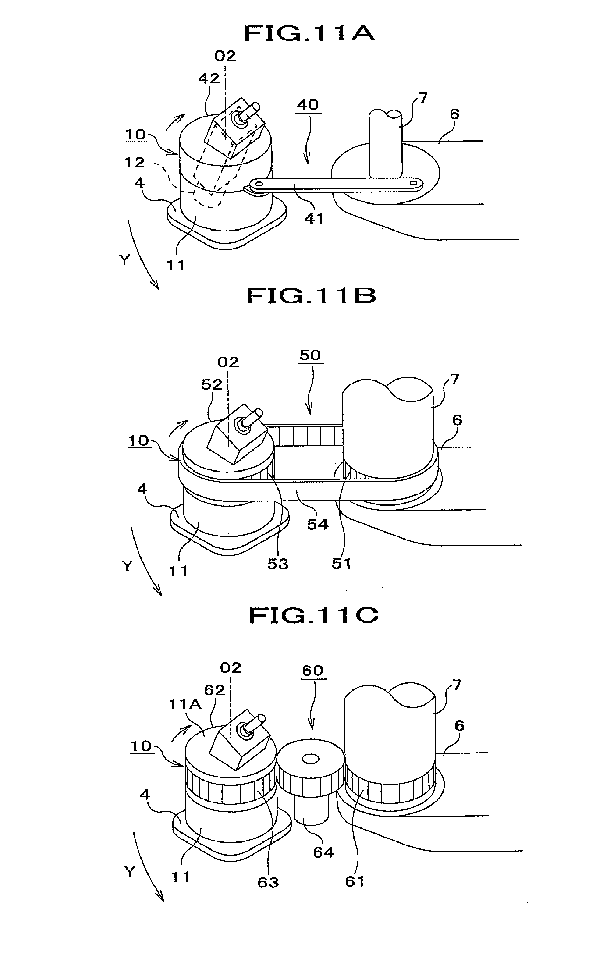

FIG.11A is a figure showing a camera driving mechanism of a third embodiment for the door mirror according to the present invention. FIGS.11B and 11C are similar figures for a fourth and a fifth embodiments, respectively.

As shown in FIG.11A, a driving mechanism 40 of the third embodiment comprises a link 41 and a rotational frame 42 which is an upper portion of a camera housing 11 and can rotate horizontally. One end of link 41 is supported around a connecting shaft 7 through an axis on a mirror base 6 and the other end is supported around the rotational frame 42 through another axis. An upper portion of a camera 12 is secured to the rotational frame 42 so that a rotational axis 02 of camera 12 is aligned with another rotational axis of rotational frame 42. The camera 12 is in this way controlled so that the rotational angle thereof is approximately the same as the pivotal angle of mirror housing 2 and the rotational direction is opposite to that of mirror housing 2 while the mirror housing 2 makes a pivotal movement (e.g. Y direction of retracting shown by the solid line in FIG.11A).

As shown in FIG.11B, a driving mechanism 50 of the fourth embodiment comprises a first gear 51 machined around a support shaft 7 on a mirror base 6. Also the driving mechanism 50 has a second gear 53 machined around a rotational frame 52 of a camera housing 11 supporting a camera 12 and a timing belt 54 connecting the first and second gears 51 and 53. The camera 12 is in this way controlled so that the rotational angle thereof is approximately the same as the pivotal angle of mirror housing 2 and the rotational direction is opposite to that of mirror housing 2 while the mirror housing 2 makes a pivotal movement (e.g. Y direction of retracting shown by the solid line in FIG.11B).

As shown in FIG.11C, a driving mechanism 60 of the fifth embodiment comprises a first gear 61 machined around a support shaft 7 on a mirror base 6. Also the driving mechanism 60 has a second gear 63 machined around a rotational frame 62 supporting a camera 12 and a gear 64 engaging with the first and second gears 61 and 63 therebetween. The camera 12 is in this way controlled so that the rotational angle thereof is approximately the same as the pivotal angle of mirror housing 2 and the rotational direction is opposite to that of mirror housing 2 while the mirror housing 2 makes a pivotal movement (e.g. Y direction of retracting shown by the solid line in FIG.11C).

As shown in FIG.3, the camera module 10 has an adjusting mechanism 70 which positions the camera 12 rotationally, which is rotatably supported in the camera housing 11, at the neutral position N1, stored position N2 and forward position N3 discretely.

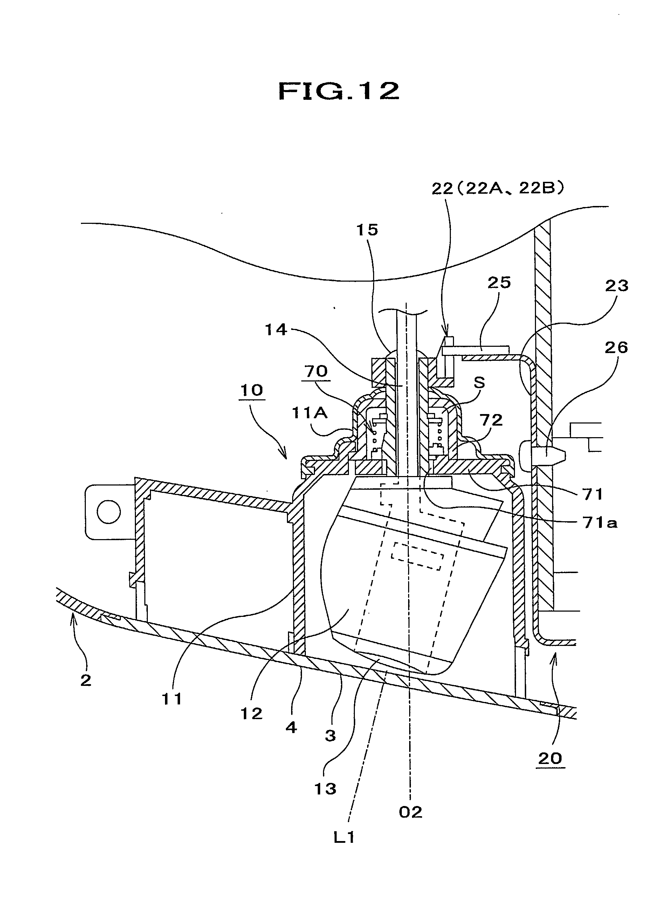

The adjusting mechanism 70 is mounted in a frame 11A connected to an upper portion of the camera housing 11, as shown in FIG.12. Inside the frame 11A, a middle frame 71 and a case 72 installed thereon define a storing space S for the adjusting mechanism 70. In the storing space S the rotational shaft 14 of camera 12 is inserted through an axial hole 71a made on the middle frame 71 and one end of the rotational shaft 14 penetrates a top of the frame 11A of camera housing 11. The second connecting element 22, with which the second rod 25 serving as the second holding element comes into contact, is provided for the exposed portion of rotational shaft 14 and thereby the rotational shaft 14 rotates through the driving mechanism 20 following a pivotal movement of the mirror housing 2.

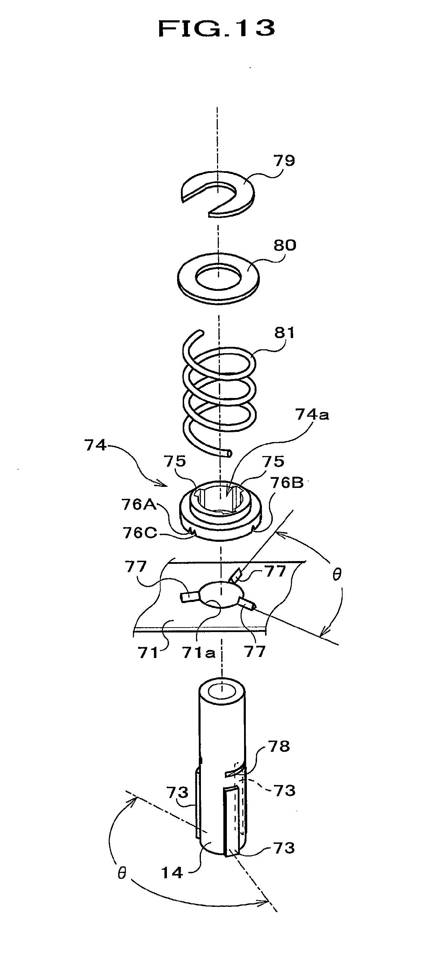

As shown in FIG.13, three pieces of projections 73 are provided around the rotational shaft 14 at regular intervals circumferentially with an angle θ (θ = 120 deg.). A plate clutch 74, which has an axial hole 74a for inserting the rotational shaft 14, is mated therewith. There are three pieces of depressions 75 on the inner circumference of axial hole 74a at regular intervals with the angle θ (θ = 120 deg.), which are correlated with the projections 73, respectively. Each depression 75 can engage with each projection 73. In this way the plate clutch 74 rotates synchronized with the rotational shaft 14. On the under surface of plate clutch 74 are formed grooves 76A, grooves 76B and grooves 76C, each of which has a cross section of V shape extending in a radial direction.

On the other hand three pieces of projections 77 with a cross section of V shape are provided around the axial hole 71a of middle frame 71 axially at regular intervals with the angle θ (θ = 120 deg.). When the plate clutch 74 rotates synchronized with the rotational shaft 14, the projections 77 engage with one of three types of groove 76A, 76B or 76C, thereby controlling the rotational shaft 14, namely the camera 12 so that it can be positioned at the neutral position N1, stored position N2 and forward position N3.

As shown in FIG.13, a groove 78 for insertion of a V plate 79 is formed around the rotational shaft 14 so that the groove 78 is located above the plate clutch 74 while it is mated with the rotational shaft 14. The V plate 79 is fixed by the groove 78 attachably thereto and detachably therefrom. The V plate 79 is for restraining a washer 80, which is mated with the rotational shaft 14, from displacing upward. A coil spring 81 is interposed between the washer 80 and the plate clutch 74.

The urging force of coil spring 81 urges the plate clutch 74 toward the middle frame 71 of camera housing 11 so that the grooves 76A, 76B and 76C can be engaged elastically with the projections 77 at the neutral position N1, stored position N2 and forward position N3. The plate clutch 74 is thus allowed to rotate discretely synchronized with the rotation of rotational shaft 14 of camera 12, which is driven by a pivotal movement of the mirror housing 2.

The grooves 76A which are carved on the under surface of plate clutch 74 are positioned radially at regular intervals with the angle θ (θ = 120 deg.). Other grooves 76B and 76C are positioned in the same manner. The grooves 76A, 76B and 76C are also positioned: the angle θ1 between the neutral position N1 and stored position N2 is 56 deg. 12 min. and the angle θ2 between the neutral position N1 and forward position N3 is 17 deg. The grooves 76A can position the neutral position N1, the grooves 76B the stored position N2 and the grooves 76C the forward position N3, respectively. In this way the accuracy of positioning of camera 12 at the neutral, stored and forward positions N1, N2 and N3 during a pivotal movement of the mirror housing 2 can be improved.

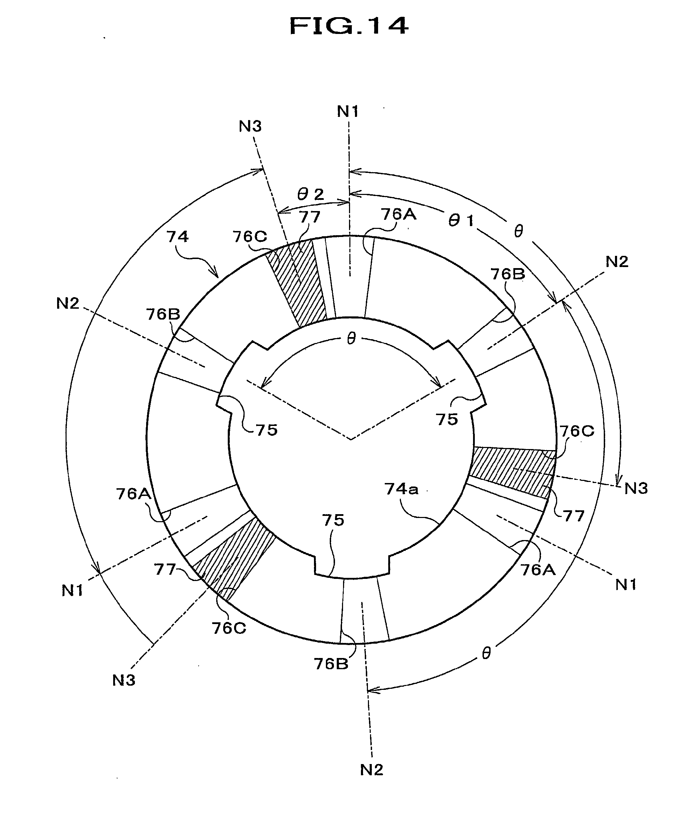

On the way of a pivotal movement of the mirror housing 2 from the neutral position N1 to the forward position N3 as shown in FIG.7, the aforementioned adjusting mechanism 70 regulates the rotation of camera 12 so that the hatched projections 77 shown in FIG.14 engage with the grooves 76C, for example, for positioning of the forward position N3. If the mirror housing 2 makes a further pivotal movement beyond the forward position N3 after the rod 24 of driving mechanism 20 is released from the returning rib 21B, the adjusting mechanism 70 prevents the further rotation of camera 12, thereby restraining shifting of an image acquisition area. It also allows a smooth rotational movement of the camera 12 when the mirror housing 2 makes a return pivotal movement from the forward position N3 back to the neutral position N1.

In the embodiments described above, attention has been directed to keeping a fixed direction of optical axis (image acquisition area) of the camera 12 while the mirror housing 2 makes a pivotal movement. Specifically, the major object of the present invention is to restrain shifting of the image acquisition area captured by camera 12 as much as possible when the mirror housing 2 is stored, even if an exactly fixed image acquisition area can not be maintained.

The present invention, which has been described in the above embodiments referring to a door mirror as an example of the exterior rearview mirror, can be applied to a side mirror.

## Claims

1. A camera built-in exterior rearview mirror comprising:
a mirror housing which is mounted on a vehicle through a mirror base for free pivotal movement from a neutral position to a rear stored position and a front position;
a camera module disposed in said mirror housing;
a camera installed in said camera module; and
a camera angle adjusting means for adjusting an angle of said camera,
**characterised by** shifting of an image acquisition area of said camera is restrained so that said image acquisition area can be an approximately fixed area while said mirror housing makes a pivotal movement.

2. A camera built-in exterior rearview mirror according to claim 1, wherein said camera angle adjusting means comprises a camera control means for controlling rotationally said camera which is installed rotatably in said camera module.

3. A camera built-in exterior rearview mirror according to claim 1 or 2, wherein a lens of said camera installed in said camera module is oriented downward.

4. A camera built-in exterior rearview mirror according to claim 1,2 or 3, wherein said camera installed in said camera module captures images through a transparent element covering an observation opening made on said mirror housing.

5. A camera built-in exterior rearview mirror according to claim 4, wherein said transparent element is integrally mounted to said camera module.

6. A camera built-in exterior rearview mirror according to any one of claims 1 to 5, wherein a rotational axis of said camera installed rotatably in said camera module and a pivotal axis of said mirror housing are approximately parallel.

7. A camera built-in exterior rearview mirror according to claim 6, wherein a rotational angle of said camera is approximately the same as a pivotal angle of said mirror housing.

8. A camera built-in exterior rearview mirror according to claim 7, wherein a pivotal movement of said mirror housing is controlled by a motor and said camera is also rotated by driving force of said motor.

9. A camera built-in exterior rearview mirror according to any one of claims 1 to 8, wherein said camera module is installed in the mirror housing attachably thereto and detachably therefrom.

10. A camera built-in exterior rearview mirror comprising:
a mirror housing which is mounted on a vehicle through a mirror base for free pivotal movement from a neutral position to a rear stored position and a front position;
a camera module disposed in said mirror housing;
a camera installed in a camera housing of said camera module; and
a lens of said camera which is oriented downward so that said camera can be positioned to face somewhat diagonally outer front alongside said vehicle to capture a wide image, **characterised in that**:
said camera is disposed rotatably about a rotational axis in said camera housing, which is approximately in parallel with a pivotal axis of said mirror housing,
said rearview mirror comprises a driving mechanism which rotates said camera to follow a pivotal movement of said mirror housing, and
said driving mechanism maintains approximate parallelism of an optical axis of said camera so that shifting of an image acquisition area of said camera can be restrained while said mirror housing makes a pivotal displacement from a neutral position.

11. A camera built-in exterior rearview mirror according to claim 10, wherein said drive mechanism comprises an interlocking element which interlocks with a pivotal displacement of said mirror housing relative to said mirror base and rotates said camera not only in an opposite direction to a pivotal direction of said mirror housing but also by a rotational angle which is approximately the same as a pivotal angle of said mirror housing.

12. A camera built-in exterior rearview mirror comprising:
a mirror base secured to a vehicle;
a support shaft projecting from said mirror base;
a support frame supported rotatably on said mirror base through said support shaft;
a mirror housing which is pivotable from a neutral position to a front position and a rear stored position relative to said mirror base;
a camera housing installed in said mirror housing; and
a camera installed in said camera housing, which is secured to said mirror housing so that a lens of said camera can be oriented downward to face an observation opening provided on a bottom surface of said mirror housing,
**characterised in that**:
said camera is supported rotatably about an rotational axis, which is approximately in parallel with a pivotal axis, through a rotational shaft in said camera housing, and said lens is oriented so that an optical axis thereof can be pointed to a somewhat diagonal outer front alongside said vehicle and said camera can capture a wide image, and
said rearview mirror comprises a driving mechanism which can rotate said camera by a rotational angle which is approximately the same as a pivotal angle of said mirror housing in an opposite direction to a pivotal direction of said mirror housing.

13. A camera built-in exterior rearview mirror according to claim 12 further comprising:
a first connection provided around said support shaft of mirror base;
a second connection provided for said rotational shaft of camera; and
an interlocking element having a first holding element and a second holding element at both ends thereof,' each of said first and second elements being in contact with each of said first and second connections, and said interlocking element supported shiftably and pivotably by a support frame to which said mirror housing is secured,
wherein said interlocking element can make a shifting and pivotal movement and rotate said rotational shaft of said camera interlocking with a pivotal movement of said mirror housing about said support shaft which supports said support frame.

14. A camera built-in exterior rearview mirror according to claim 13, wherein at least said first connection comprises a storing rib and a returning rib having a gap therebetween, a rod of said first holding element is disposed between said ribs, when said mirror housing is in said neutral position, said rod is placed apart from said storing rib, or when said mirror housing is in said stored position, said rod is placed apart from said returning rib.

15. A camera built-in exterior rearview mirror according to claim 14, wherein said rod is released from said returning rib while said mirror housing makes a pivotal movement from said neutral position to said forward position.

16. A camera built-in exterior rearview mirror according to anyone of claims 12 to 15, wherein said mirror further comprises an adjusting mechanism for restricting a rotational area for said camera contained in said camera housing, said adjusting mechanism positions said camera discretely for said neutral position, said stored position and said forward position.
